# EUROPEAN PATENT SPECIFICATION

(11) **EP 2 747 000 B1**
(45) Date of publication and mention of the grant of the patent: **22.11.2017**
(21) Application number: 12198470.2
(22) Date of filing: 20.12.2012
(51) Int. Cl.: G06Q 10/06

(54) **SYSTEM AND METHOD FOR AUTOMATIC ALLOCATION OF MOBILE RESOURCES TO TASKS**
System und Verfahren für die automatische Zuweisung von mobilen Ressourcen zu Aufgaben
Système et procédé d'attribution automatique de ressources mobiles à des tâches

(43) Date of publication of application: 25.06.2014
(73) Proprietor: ABB Schweiz AG, 5400 Baden (CH)
(72) Inventor: Franke, Carsten, 5608 Stetten (CH); Harjunkoski, Iiro, 69469 Weinheim (DE); Saliba, Sleman, 69115 Heidelberg (DE)
(74) Representative: Marks, Frank

(56) References cited:
- EP-A1- 2 261 843
- WO-A1-98/22897
- US-A1- 2008 162 242
- US-B1- 7 788 121

## Description

The invention relates to a system and a method for automatic allocation of mobile resources to tasks which are to be performed at at least one location distant from the mobile resources. The system comprises at least one database arranged to store data defining the tasks as well as the mobile resources, and a computing device containing a first data processing unit which is arranged to wait for a trigger event and, after having been notified of the trigger event, to access the at least one database, to allocate the mobile resources to the tasks thereby generating for at least one of the mobile resources an individual schedule, and to transmit each of the individual schedules to a mobile communication device assigned to the respective one of the mobile resources.

Currently, there are various systems on the market for automatic allocation of mobile resources to tasks, such as Service Suite by Ventyx and Clickmobile by ClickSoftware.

The term "task" refers to any kind of maintenance, service or repair work to be performed at a technical installation either on an industrial site, or in private homes or a municipal infrastructure, where the technical installations belong in particular to the utilities industry, such as gas, electric, water or telecommunications utilities.

Accordingly, the term "mobile resource" refers to field operation teams equipped to perform the above described tasks.

In the known systems for automatic allocation of mobile resources to tasks, a data processing unit of a computing device performs the allocation after having been triggered by a trigger event, where the trigger event can be generated either periodically by a clock, or aperiodically by a user or system input requesting a re-allocation or re-scheduling.

The schedules are the output generated by the data processing unit, wherein the schedules include information on which mobile resource shall perform which tasks in which given sequence at what specified times during a day. Since the tasks are usually to be performed at different geographic locations, the schedules further include a route which is given as a sequence of the geographic locations corresponding to the sequence of allocated tasks. When generating the schedules, the travel time between the geographic locations is commonly taken into account as the estimated time needed to cover the length of a straight line between respective two of the geographic locations.

Commonly, a long-term schedule is generated first for each field operation team, which usually covers the next working day, but may as well relate to the next working week. Afterwards, re-scheduling of the long-term schedule is adapted to take into account the changes in the influencing factors, such as sick leave of a technician or breaking-down of the car of a field operation team, thereby generating a corresponding short-term schedule. In the known systems, the changes in the influencing factors are at least partly handled manually, i.e. the short-term schedules are not the result of a fully automated re-allocation but of man-made adjustments in the long-term schedules. Accordingly, short-term schedules are usually not optimal. All of the above-named schedules fall under the term "individual schedule", where "individual" means that the mobile resources are allocated to a respective schedule which is adjusted to their corresponding availability.

The individual schedules are each transmitted to a mobile data communication device assigned to the respective one of the mobile resources, which commonly is a handheld device.

From EP 2 261 843 A1, a technician control system is known which contains a scheduling application to define work schedules for field technicians and a dispatch application for conveying schedule change information to the field technicians. The scheduling application prioritizes schedules and use of resources based on client configuration settings. It matches technicians to work orders based, for example, on skills and parts on hand, and it may use street-level routing to determine optimal routes for the field technicians in order to minimize drive time and fuel consumption. The dispatch application may be used to respond to events that occur throughout the work day. For example, field technicians may be automatically rerouted based on dynamic traffic condition information.

As a result of the ever growing competition on the utilities market and due to an increase in the diversity of utilities and energy resources and, therefore, in the technical complexity and failure proneness of utility networks and home installations, time and resource efficiency as well as reliability of the schedules are becoming more and more important. Accordingly, there is a current trend towards improving the quality and practicability of the schedules.

This is for example achieved by introducing a demand forecasting element in the above named systems for automatic allocation of mobile resources to tasks, where the number and extent of future tasks, i.e. the future field work demand, is predicted based on experiences learned from past events and based on for example a weather forecast as an external factor.

For example, it is suggested in US 2009/0171718 A1 to provide a work load modeling system to be used by a communication network service provider. The work load modeling system is configured to dynamically forecast a workload based on information corresponding to a workforce, a current workload, historical workloads, and one or more factors influencing the workload, e.g., weather and geographic locality, where these input data are provided as user input data and from various external data management systems, such as a workforce management system and a ticket system. The modeling system may provide a prediction report to a user or it may alert a workforce as to real-time variations in a workload that necessitate revisions to workforce scheduling.

It is an object of the present invention to further improve the present systems and methods for automatic allocation of mobile resources to tasks so that the practicability and reliability of the generated schedules are increased in order to be able to react more precisely to real-time events. This is for example especially important in connection with emergencies occurring on a technical installation requiring immediate countermeasures, so that for example a black-out of an electricity network can be avoided.

This object is achieved by a system and a method according to the independent claims.

In the system according to the invention, the at least one database is arranged to store
- for each mobile resource at least one corresponding skill and equipment,
- street-level data defining roads between a current location of the mobile resources and the distant locations of the tasks, and
- dynamic data which have a potential impact on the performing of the tasks.

Further, the first data processing unit is arranged to perform the allocating of the mobile resources by allocating the skills to the tasks and to the equipment and to generate for the at least one of the mobile resources as part of each individual schedule a street-by-street route along the roads to the respectively allocated tasks.

An important part of the present invention is a second data processing unit which is implemented either in the computing device or in a further computing device. The second data processing unit is arranged to continuously pre-process the dynamic data in order to determine which of the street-level data, the mobile resources and the tasks are affected by the dynamic data and to what extent, and to amend the affected data accordingly.

The invention is based on the following string of considerations and ideas:
- firstly, to use street-level data, in particular street map data, to determine for each schedule a street-by-street route, so that a more realistic and precise travel time is calculated by the first data processing unit based on a more realistic calculation of distances between geographic locations of the tasks;
- secondly, to further increase the reliability of the travel times by taking into account dynamic data which may influence the travel times along the street-by-street routes, such as weather forecast data;
- thirdly, to not only take into account forecast data, but also dynamic data which contain information on a sudden change of an influencing factor to the travel times or, more generally, to the performing of the tasks and thereby to the schedules, such as data on traffic jams; and
- fourthly, to avoid further extension of the known resource allocation systems by not simply adding a further data processing module for the handling of traffic-related information, but to create a simplified system structure by reducing and limiting the main elements of the resource allocation system to two data processing units, where one data processing unit performs the actual allocation and the other data processing unit prepares all relevant input data to the allocation algorithms and stores them in a mutually accessible database, and by defining and establishing an invariable data interface between the two data processing units in the form of a fixed set of input data to the resource allocation.

As a result, a system structure is generated with which any additional kind of dynamic and real-time data influencing the performing of the tasks can be taken into account by the resource allocation without having to adapt and change the resource allocation processing unit, i.e. the first data processing unit, and its algorithms. Accordingly, any influencing factor which may jeopardize the execution of the allocated tasks and which therefore may result in severe consecutive faults of the technical installation to be repaired, for example, can easily be integrated into the resource allocation system, so that the quality and precision of the schedules is easily improved and adapted to the current needs.

Further, since the second data processing unit pre-processes the dynamic data continuously, the input data to the first data processing system are always kept up-to-date, so that it is guaranteed that any triggered re-scheduling is based on the most recent information. An even further advantage is that the first and second data processing units can be operated asynchronously, i.e. on a triggered basis versus continuously, as the database allows for an independent and asynchronous access to the stored data, so that the first data processing unit can deliver an updated schedule as quickly as possible without having to wait for the second data processing unit.

According to the invention, the fixed set of input data to the resource allocation contains data defining the skills and equipment describing the mobile resources, as well as the street-level data and the data defining the tasks. The second data processing unit amends these input data continuously in order to reflect the impact of the dynamic data, so that a subsequently generated schedule and street-by-street route are adjusted to any changes in the conditions for reaching the next task location in time and for performing the next task.

In the system and method according to the invention, the term "mobile resources" is clearly defined to refer to both human resources, i.e. the field operation teams, as well as their technical equipment, where the field operation teams consist of one to several engineers and/or technicians and where the technical equipment includes vehicles, in particular cars and vans, with which the teams are transported to the technical installations, as well as any computer device, tool, material and instrument needed for performing the tasks. Accordingly, a schedule assigned to a mobile resource may be either assigned to a specific field operation team or to a specific vehicle belonging to the respective field operation team. As a result, the transmission of the assigned schedule is either performed to a handheld device, such as a smart phone or a personal digital assistant, carried by a member of the field operation team, or to a data communication and data visualization unit attached to the vehicle of the field operation team. It is to be noted that the field operation team does not necessarily always have to travel by car. Instead, it may travel independently of the equipment, such as when a truck delivers all parts and tools in the early morning to an area which is expected to be overcrowded during the day, and where the technicians follow later by for instance public transport or by bicycle.

The mobile resources are defined by their skills and by assignable equipment. The term "skill" refers to both the knowledge and capabilities of the field engineers and field technicians as well as those skills which are the result of a fixed assignment of a certain type of equipment to the respective engineer or technician, such as a particularly equipped car or device. The term "equipment" includes everything of computer devices, tools, material and instruments which is freely assignable to any or at least among a part of the field engineers and technicians.

The term "road" refers to any trafficable, public or if applicable, private road which can be taken by a common vehicle.

The term "to pre-process" refers to any kind of data analysis with which information can be extracted from the dynamic data to be able to determine and assess the impact of the dynamic data on the fixed set of input data to the first processing unit. The pre-processing may for example be performed on the dynamic data by filtering, error-detection, statistical analysis - in particular machine learning, pattern recognition, regression and correlation analysis -, model fitting and parameter identification.

In an embodiment of the invention, the second data processing unit is arranged to introduce a logical link between at least two of the skills, equipment, roads and/or tasks, and wherein the first data processing unit is arranged to perform the allocating so that the logically linked data are reflected in the individual schedule. This is a possible extension of the fixed set of input data to the first data processing unit, thereby marking those of the input data who are a preferred combination or, in the alternative, the only possible combination of the input data as a result of the dynamic data.

In a further embodiment, the street-level data may contain for each of the roads speed-related information corresponding to a specified section of the road and wherein the first data processing unit is arranged to generate the individual schedule and the corresponding street-by-street route by minimizing a length of travel time and/or a travel distance per unified time window while maximizing the number of allocated tasks per the unified time window.

The speed-related information is preferably represented by a speed profile of expected average speed per road section or by street-map data including speed limits which are valid along the road sections. The unified time window can be defined as a couple of hours, a whole day or the length of a shift or task. When maximizing the number of allocated tasks it is of course assumed that most or preferably all of the tasks can as well be finished during the time frame allocated to them in the generated schedule.

The dynamic data may advantageously include data from a traffic control center about traffic jams, accidents and/or construction sites, and the second data processing unit may then be arranged to identify the roads which are affected by the data from the traffic control center and the extent to which the street-level data corresponding to the identified roads are affected and to adjust the corresponding street-level data, in particular the speed-related information, accordingly. For example, in case that speed-related information per road or road section is used, this information may be amended by the second data processing unit towards an expected average speed of zero km/h, thereby forcing the first data processing unit to avoid these roads.

The database may be arranged to store the dynamic data over a pre-defined period of time, and the second data processing unit may then be arranged to identify from the dynamic data a time-dependent pattern of traffic intensity along the roads and to amend the street-level data to reflect the pattern of traffic intensity by adjusting the speed-related information accordingly. For example, the traffic pattern may indicate the variations of the expected average speed of a road or road section over a working day or depending on the day of the week.

The dynamic data may further include data of a traffic related public event, such as vacations, concerts, marathons, street festivals etc.. In that case, the second data processing unit may be arranged to estimate the impact of the event on the speed-related information and to identify those roads which will be blocked for any traffic during the event. Here again, the speed-related information for the identified roads in the database will be adjusted accordingly.

In another example, the dynamic data may include weather related data, the second data processing unit may be arranged to correspondingly adjust the speed-related information of affected roads and/or a priority ranking of the equipment and/or skills, and the first data processing unit may accordingly be arranged to perform the allocating so that the priority ranking is reflected in the individual schedule. For example, in case of ice or snow, it can be advisable to not let the field operation teams take minor roads, as they most probably will not be snow-plowed. This may again be implemented by changing the expected average speed to zero. In general, during expected or currently occurring bad weather conditions, the expected average speed per road may be decreased, and it may be increased when the weather is good. An example for a priority ranking of equipment would be to give cars with winter tires a higher priority in case of snow. An example for prioritizing of skill would be to let the best drivers take the tasks furthest away or the most urgent tasks, which means not only to give good driving skills the highest priority ranking, but in addition to link the good driving skills to the furthest away or most urgent tasks.

In another possible embodiment, the dynamic data include data on the availability of fuel and/or electricity, for example in the form of a report about a power outage or black-out. In this embodiment, the second data processing unit is arranged to adapt a priority ranking of the tasks and/or of fuel- or electricity driven equipment to the respective availability. For example, electric cars should not be taken into a black-out zone when they are expected to require re-charging. Or the priority ranking of tasks may take into account, whether the respective task can be fulfilled in an area where there is no fuel and/or electricity available or whether the respective task should be given the highest possible priority as its fulfillment will solve the power outage problem.

In a possible extension of the resource allocation system, the second data processing unit is arranged to predict future tasks based on the dynamic data and the first or second data processing unit is arranged to define an appropriate emergency reserve of mobile resources capable of responding to the predicted tasks. The emergency reserve of mobile resources may for example be given the lowest priority ranking so that no or only the least important tasks are assigned to them, or they may be linked to tasks which can be interrupted at short notice without any problem.

In an even further example, the dynamic data may include an update on a state of a mobile resource, and the second data processing unit may be arranged to determine a resulting impact on any of the skills and/or equipment. For example, if a car or van of one of the field operation teams has run out of certain equipment, the person or persons assigned to the car may be stripped of corresponding skills, such as the ability to perform specific testing or measuring. Alternatively, a logical link between the car and the field operation team may be cancelled by the second data processing unit, and the car may be given the lowest possible priority ranking in order to allow for the first data processing unit to re-allocate the team to a different car. In a further example, a field technician may report a broken arm. As a result, the second data processing unit would adapt his or her skills accordingly, for example removing a skill for climbing and for dealing with intricate tools.

The embodiments of the method for automatic allocation of mobile resources to tasks include all the steps performed by the elements and units contained in the above-described system.

The invention and its embodiments will become more apparent from the example described below in connection with the appended drawing which illustrates:
- Fig. 1: a system for automatic allocation of mobile resources to tasks.
- Fig. 2: a graphic representation of street-level data.

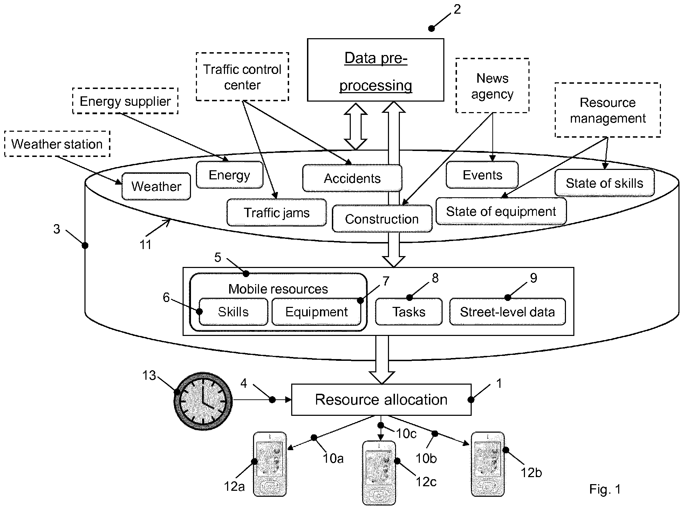

In Fig. 1, a system for automatic allocation of mobile resources to tasks is shown which, according to the invention, comprises a database 3 which can be any information collecting device, which is file-based and memory resident with the capacity to store the needed information and to provide it to other devices. The database 3 is arranged to store data defining the tasks 8 as well as the mobile resources 5, where the data defining the mobile resources contain for each mobile resource 5 at least one corresponding skill 6 and at least one corresponding equipment 7. For the sake of clarity, it is pointed out that the plural terms used throughout this description, such as tasks, skills etc., shall always refer to at least two of the respective items.

The database 3 is further arranged to store street-level data 9 which define roads between a current location of the mobile resources 5 and the locations of the tasks 8, wherein it is assumed that the locations of the tasks 8 are geographically distant from the location of the mobile resources 5 so that the mobile resources 5 have to be transported to the locations of the tasks 8. Even further, the database 3 is arranged to store dynamic data 11 which have a potential impact on the performing of the tasks 8, where in the example shown in Fig. 1, the dynamic data may be provided by information systems of external data sources, such as manual services, automatic public information or targeted service companies who maintain up-to-date information.

In the following, the exemplary dynamic data of Fig. 1 and their sources are listed:
- a weather station may provide weather forecast data as well as data on current weather conditions, including for example storms, temperatures, precipitation and ice-conditions,
- a supplier of energy, where energy is understood in terms of fuel and/or electricity, may provide data on the availability of fuel and/or electricity, in particular on power cuts,
- a traffic control center may transmit the most recent information on accidents and traffic jams, where the transmission may be nation-wide by radio frequency,
- a local news agency may deliver reliable data on public events and on currently installed construction sites, and
- a resource management system may provide information which affect the state of skills 6 and equipment 7, such as that a travel distance took longer than anticipated, that the current task turns out to be a difficult assignment, specific technical information, or complexities occurring during execution of a task.

The system further comprises a first computing device containing a first data processing unit 1, where the first data processing unit 1 is arranged to wait for a trigger event 4, which in the example of Fig. 1 is a clock 13 sending out two different trigger events 4: one at least 24 hours in advance to initiate generation of a long-term schedule, and one before starting of the respective shift to initiate a re-scheduling in order to take the latest changes in the tasks 8, such as order completions, cancellations, and additions, as well as the latest dynamic data 11 into account.

The first processing unit 1 is further arranged to - after having been notified of the trigger event 4 - access the at least one database 3, to allocate the skills 6 to the tasks 8 and to the equipment 7 thereby generating for at least one of the mobile resources 5, which are here three different field operation teams, an individual schedule 10a, 10b, 10c and - as part of each individual schedule 10a, 10b, 10c - a street-by-street route along the roads to the respectively allocated tasks 8. The first processing unit 1 is further arranged to transmit each of the individual schedules 10a, 10b, 10c to a mobile data communication device 12a, 12b, 12c assigned to the respective one of the mobile resources, i.e. the field operation teams. The allocating of the skills 6 to the tasks 8 and equipment 7 is performed by applying optimization algorithms in order to generate the at least one schedule by minimizing the estimated length of travel time and/or travel distance per pre-defined time window while maximizing the number of allocated tasks during that time window.

According to the invention, the system further comprises a second data processing unit 2 which is here implemented in a second computing device. The second data processing unit 2 is arranged to continuously pre-process the dynamic data 11 in order to determine which of the street-level data 9, the mobile resources 5 represented mainly by their skills 6 and equipment 7, and the tasks 8 are affected by the dynamic data 11 and to what extent, and to amend the affected data 5, 8, 9 accordingly. Examples for such amendments are for example the increasing in a priority-level for certain equipment to be prepared for an expected increased complexity of a task; or the reduction in travel times due to e.g. bad visibility or partly blocked roads as a result of an accident.

Even further, future tasks may be generated and the capacity of corresponding necessary skills and equipment may be reserved, when certain service requests are expected to increase due to some conditions, where the service requests are typically coming as emergency requests only after the damages have occurred or are about to be occurring. In these cases it is of great value to reserve sufficient buffers of skilled labor, by keeping them as an emergency reserve, by either not assigning them to standard tasks, or by assigning them to filler orders that can be interrupted short-term.
In the following, examples for such future tasks are given:
- An approaching heat wave may increase the request for air-conditioning unit repairs by a given percentage.
- Heavy rainfall may increase the demand of maintenance for sewage networks and pumping assignments for house cellars etc.
- Snow or ice storm may increase the needs of towing trucks, medical emergency aid and snow-cleaning equipment at major roads, airports and public areas.
- Big public events or demonstrations may indicate an increased crime-rate which for a security company may be important to focus more labor on given areas or multiply the workforce by contracting

Expressed in other words, the task of the second processing unit 2 is to take the collected dynamic data 11 and to process it such that useful information and knowledge can be extracted from it. It can contain numerous different tasks such as update road work information, do statistical analysis on for instance weather effect on traffic or traffic situations based on weekday and time-of-day, create models for major holiday seasons and further. Furthermore, the second data processing unit 2 could also be able to predict tasks, also called orders, and to predict type of tasks for certain times of the season combined with location data. The data processing algorithms can work periodically, continuously or event-based, e.g. when new data is coming, in order to ensure that the parameters for the resource allocation are always kept up-to-date. The algorithms applied by the second data processing unit 2 can consist of any functions used in computational intelligence, like neural network applications, evolutionary algorithms, machine learning, data mining, statistical analysis, error correction, model fitting and parameter identification functions.

The trigger event 4 may as well be caused by the second data processing unit 2 as a result of one of the dynamic data signaling for example an emergency which requires immediate action.

By inserting the database 3 between the first and the second data processing units, asynchronous data exchange between these two units is enabled, as they can access the data in the database 3 at any time, without coordination. The input data to the first data processing unit 1 can be collected from the database 3 for example before every run. In this way, the resource allocation can always rely on being able to access relevant information. As the database can always be expanded and further built upon, it can cover today's as well as tomorrow's needs of resource allocation solutions. It should be noted that the database is a database open to connect to several collaborative systems that can access and provide new information from various sources.

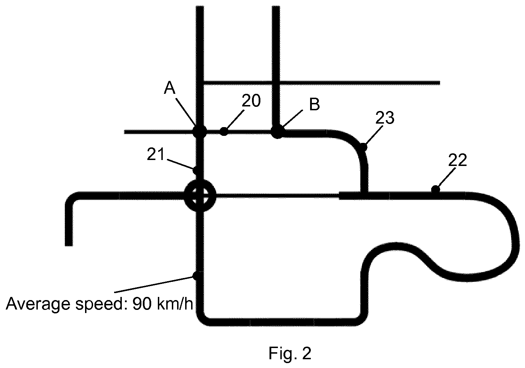

In Fig. 2, an example for a graphic representation of street-level data 9 is shown. The roads are represented by two-dimensional graphs as in common road maps. To these roads, the following further data may be attached: the expected or estimated average speed along the road; traffic regulations, such as one-way street; and/or the type of the road, indicated here by the thickness of the respective graph, where a thick line may indicate a highway and a thin line may indicate a secondary road or an intra-urban road leading through an inhabited place. A first task is to be performed at location A and a second task is to be performed at location B.

The first data processing unit 1 estimates the travel time between the tasks based on travel distance and expected travel speed and takes it into account during resource allocation.

In known resource allocation systems, instead of using the above described road map or street-level data, the travel distance would be estimated by just using the geographic coordinates of locations A and B to calculate the travel distance through a straight line between the locations. In the example of Fig. 2, the travel distance would accordingly have been calculated to be equal to the length of road 20. In other words, known resource allocation systems do not generate street-by-street level routes as part of the schedule, but instead just provide the schedule in the form of a sequence of geographic locations of the tasks, where the field operation team would then have to use a navigation system to generate the corresponding route.

However, it is important to realize that the quality of the resulting schedule and street-by-street route can be very critical as a poor allocation of mobile resources to tasks may result either in missed appointments, or in an inefficient use of capacity and skills, or in a waste of fuel and, due to that, in unnecessary emissions.

In order to improve the quality of the schedules, it is suggested to use the above described street-level data for calculating the travel times and to include the finding of an optimal route in the optimization of schedules. From the street-level data, the first data processing unit 1 learns that road 20 is a one-way street which is open only in the direction from B to A. Accordingly, the first processing unit 1 would then find the route which leads along the main roads 21, 22 and 23 as the shortest way to travel from A to B. The travel distance for this route, calculated from the geographic coordinates of the roads, is much longer, as is the correspondingly estimated travel time. Accordingly, the schedule generated based on the present invention becomes much more realistic and therefore reliable so that it can be ensured that all subsequent appointments and tasks allocated to the field operation team which takes care of the tasks at locations A and B can be met as well. The travel time is estimated taking into account the average speed along each of the roads 21 to 23, wherein the average speed for multiple consecutive roads results in a position-dependent speed profile and wherein additionally a time-dependence may be introduced by pre-defining the average speed for example for different times of the day and/or the week. Alternatively, the first data processing unit 1 may derive the average speed from the street-level data 9 taking into account speed limits attached to the specific road types and possible further traffic restrictions. However, it is preferred that the definition of the street-level data 9 remains unchanged, independently of which kind of dynamic data 11 are provided. As traffic restrictions may be caused by different real-time events, it is advantageous if the average speed is indeed defined as input to the first processing unit 1, since the second data processing unit 2 may pre-process the different real-time events and reflect their impact on the travel time by adjusting the average speed accordingly. In general, the travel time predictions can be more accurate and meaningful if the related information affecting the normal flow of traffic or a driver's behavior is known in advance.

Examples for dynamic data 11 which may affect the street-level data are given below:
- For a given area, the time-dependent traffic patterns can be quite similar, so that mainly the speed parameters therefore must only be adapted to various regions.
- Vacation times, especially the start and end of major holidays, have a significant effect on the normal rush hours.
- Events such as city marathons, political venues, street festivals or big rock concerts may block streets or part of the city from normal traffic.
- Weather dependent conditions may directly affect the traffic and accident rates.
- Ideally the traffic related data during the most essential travel times can be stored in the database 3 and used by the second data processing unit 2 to statistically evaluate a better travel time for the same distance and, accordingly, adapt the average speed in the street-level data and/or a priority level of certain roads.
- There may be bottlenecks, like construction sites blocking one lane of a road, which can cause heavy congestions and may result in an increase in travel time for a 2 km distance from normally 2 minutes up to 30 minutes.

As already pointed out, with the present invention, the optimizing of the allocation of orders or tasks to mobile resources is improved by taking advantage of critical information that is publically or privately available through modern communication technologies. In order to provide a system which is open to include as much additional information as is deemed necessary to achieve a desired level of quality of schedules, it is suggested that the central database 3 collects all the information, that the data interface to the first processing unit 1 is standardized by introducing a fixed set of input data 5, 8 and 9 in a pre-defined format, and that the second data processing unit 2 keeps the fixed set of input data 5, 8 and 9 up-to-date by analyzing the dynamic data 11, by deriving conclusions on their impact on the input data 5, 8 and 9 and by adjusting the input data 5, 8 and 9 accordingly.

In this way, the handling and utilization of various real-time data is enabled during allocation of mobile resources. Further, the resource allocation system may be connected to a free choice of different data sources and external information systems providing the real-time data, where already a subset of all available data may be enough to improve current resource allocation systems, as any enhancements on the input data to the first data processing unit 1 can contribute to more robust solutions. As a result, various functionalities can easily be integrated in the system, so that the system may be configured by the end user according to the primary needs. Further, the safety and environmental impact of the mobile units, i.e. of the field operation teams, are enhanced, since their schedules are more realistic so that they no longer need to rush from task to task in order to make up for time lost due to poor scheduling and so that unnecessary driving and thereby unnecessary usage of fuel is reduced. The proposed system is more accurate, responsive and predictive as known resource allocation systems.

## Claims

1. System for automatic allocation of mobile resources to tasks which are to be performed at at least one location distant from the mobile resources, comprising
• at least one database (3) arranged to store data defining the tasks (8) as well as the mobile resources (5),
• a first computing device containing a first data processing unit (1) which is arranged to
∘ wait for a trigger event (4),
∘ after having been notified of the trigger event (4), to access the at least one database (3), to allocate the mobile resources (5) to the tasks (8) thereby generating for at least one of the mobile resources an individual schedule (10a, 10b, 10c), and to transmit each of the individual schedules (10a, 10b, 10c) to a mobile data communication device (12a, 12b, 12c) assigned to the respective one of the mobile resources,
**characterized in that**
• a data interface to the first processing unit (1) is standardized by introducing a fixed set of input data (5, 8, 9) in a pre-defined format, wherein the fixed set of input data consists of the data defining the tasks (8) as well as the mobile resources (5), and of street-level data (9) defining roads between a current location of the mobile resources (5) and the at least one distant location of the tasks (8), wherein the data defining the mobile resources (5) contain for each mobile resource (5) at least one corresponding skill (6) and at least one corresponding equipment (7),
• the at least one database (3) is arranged to store the fixed set of input data (5, 8, 9) as well as
dynamic data (11) which have a potential impact on the performing of the tasks (8), and allows for an independent and asynchronous access to the stored data,
• the first data processing unit (1) is arranged to collect the fixed set of input data (5, 8, 9) from the database (3) and to perform the allocation of the mobile resources (5) by allocating the skills (6) to the tasks (8) and to the equipment (7) and to generate for the at least one of the mobile resources (5) as part of each individual schedule (10a, 10b, 10c) a street-by-street route along the roads to the respectively allocated tasks (8), and
• a second data processing unit (2) is implemented either in the first computing device or in a further computing device, wherein the second data processing unit (2) is arranged to keeping the fixed set of input data (5, 8, 9) to the first data processing unit (1) up-to-date by continuously pre-processing the dynamic data (11) in order to determine which of the street-level data (9), the mobile resources (5) and the tasks (8) are affected by the dynamic data (11) and to what extent, and by amending the affected data (5, 8, 9) accordingly.

2. System according to claim 1, wherein the second data processing unit (2) is arranged to introduce a logical link between at least two of the skills (6), equipment (7), roads and/or tasks (8) and wherein the first data processing unit (1) is arranged to perform the allocating so that the logically linked data are reflected in the individual schedule (10a, 10b, 10c).

3. System according to claim 1 or 2, wherein the street-level data (9) contain for each of the roads speed-related information corresponding to a specified section of the road and wherein the first data processing unit (1) is arranged to generate the individual schedule (10a, 10b, 10c) and the corresponding street-by-street route by minimizing a length of travel time and/or a travel distance per unified time window while maximizing the number of allocated tasks per the unified time window.

4. System according to any of the previous claims, wherein the dynamic data (11) include data from a traffic control center about traffic jams, accidents and/or construction sites and wherein the second data processing unit (2) is arranged to identify the roads which are affected by the data from the traffic control center and the extent to which the street-level data (9) corresponding to the identified roads are affected and to adjust the corresponding street-level data accordingly.

5. System according to any of claims 3 or 4, wherein the database (3) is arranged to store the dynamic data (11) over a pre-defined period of time and wherein the second data processing unit (2) is arranged to identify from the dynamic data (11) a time-dependent pattern of traffic intensity along the roads and to amend the street-level data (9) to reflect the pattern of traffic intensity by adjusting the speed-related information accordingly.

6. System according to any of claims 3 to 5, wherein the dynamic data (11) include data of a traffic related public event and wherein the second data processing unit (2) is arranged to estimate the impact of the event on the speed-related information and to identify those roads which will be blocked for any traffic during the event.

7. System according to any of claims 3 to 6, wherein the dynamic data (11) include weather related data, wherein the second data processing unit (2) is arranged to correspondingly adjust the speed-related information of affected roads and/or a priority ranking of the equipment (7) and/or skills (6), and wherein the first data processing unit (1) is arranged to perform the allocating so that the priority ranking is reflected in the individual schedule (10a, 10b, 10c).

8. System according to any of the previous claims, wherein the dynamic data (11) include data on the availability of fuel and/or electricity and wherein the second data processing unit (2) is arranged to adapt a priority ranking of the tasks (8) and/or of fuel-or electricity driven equipment (7) to the respective availability.

9. System according to any of the previous claims, wherein the second data processing unit (2) is arranged to predict future tasks based on the dynamic data (11) and wherein the first or second data processing unit is arranged to define an appropriate emergency reserve of mobile resources (5) capable of responding to the predicted tasks.

10. System according to any of the previous claims, wherein the dynamic data (11) include an update on a state of a mobile resource (5) and wherein the second data processing unit (2) is arranged to determine a resulting impact on any of the skills (6) and/or equipment (7).

11. Method for computer-implemented automatic allocation of mobile resources to tasks which are to be performed at at least one location distant from the mobile resources, comprising
• storing data defining the tasks (8) as well as the mobile resources (5) in at least one database (3),
• waiting for a trigger event (4),
• after having been notified of the trigger event (4), accessing the at least one database (3) from a first data processing unit (1), implemented in a first computing device, allocating the mobile resources (5) to the tasks (8) by using the first data processing unit (1), thereby generating for at least one of the mobile resources (5) an individual schedule (10a, 10b, 10c), and transmitting each of the individual schedules (10a 10b, 10c) to a mobile data communication device (12a, 12b, 12c) assigned to the respective one of the mobile resources (5), **characterized by** the further steps
• using a data interface to the first processing unit (1) which is standardized by introducing a fixed set of input data (5, 8, 9) in a pre-defined format, wherein the fixed set of input data consists of the data defining the tasks (8) as well as the mobile resources (5), and of street-level data (9) defining roads between a current location of the mobile resources (5) and the at least one distant location of the tasks (8), wherein the data defining the mobile resources (5) contain for each mobile resource (5) at least one corresponding skill (6) and at least one corresponding equipment (7),
o storing in the at least one database (3) the fixed set of input data (5, 8, 9) as well as dynamic data (11) which have a potential impact on the performing of the tasks (8), and allowing for an independent and asynchronous access to the stored data,
• collecting the fixed set of input data (5, 8, 9) from the database (3) and performing the allocating of the mobile resources (5) by allocating the skills (6) to the tasks (8) and to the equipment (7) and by generating for the at least one of the mobile resources (5) as part of each individual schedule (10a, 10b, 10c) a street-by-street route along the roads to the allocated tasks (8), and
• keeping the fixed set of input data (5, 8, 9) up-to-date by continuously pre-processing the dynamic data (11) by using a second data processing unit (2) implemented in a first or a further computer device in order to determine which of the street-level data (9), the mobile resources (5) and the tasks (8) are affected by the dynamic data (11) and to what extent, and by amending the affected data (5, 8, 9) accordingly.

## Patentansprüche

1. System zur automatischen Zuweisung von mobilen Ressourcen zu Aufgaben, die an mindestens einem von den mobilen Ressourcen entfernten Ort ausgeführt werden sollen, umfassend:
• mindestens eine Datenbank (3) die so ausgelegt ist, dass sie Daten speichert, welche die Aufgaben (8) sowie die mobilen Ressourcen (5) definieren,
• eine erste Computervorrichtung, die eine erste Datenverarbeitungseinheit (1) enthält, die ausgelegt ist zum:
o Warten auf ein Auslöseereignis (4),
o Zugreifen nach Verständigung über das Auslöseereignis (4) auf die mindestens eine Datenbank (3), Zuweisen der mobilen Ressourcen (5) zu den Aufgaben (8), um dadurch für mindestens eine der mobilen Ressourcen einen individuellen Plan (10a, 10b, 10c) zu erzeugen, und Senden eines jeden der individuellen Pläne (10a, 10b, 10c) an eine mobile Datenkommunikationsvorrichtung (12a, 12b, 12c), die der jeweiligen der mobilen Ressourcen zugeordnet ist,
**dadurch gekennzeichnet, dass**
• eine Datenschnittstelle zur ersten Verarbeitungseinheit (1) durch Einführen eines festen Satzes von Eingabedaten (5, 8, 9) in einem vordefinierten Format standardisiert ist, wobei der feste Satz von Eingabedaten aus den Daten, welche die Aufgaben (8) sowie die mobilen Ressourcen (5) definieren, und Straßendaten (9) besteht, welche Straßen zwischen einem aktuellen Ort der mobilen Ressourcen (5) und dem mindestens einen entfernten Ort der Aufgaben (8) definieren, wobei die Daten, welche die mobilen Ressourcen (5) definieren, für jede mobile Ressource (5) mindestens eine entsprechende Fähigkeit (6) und mindestens eine entsprechende Einrichtung (7) enthalten,
• die mindestens eine Datenbank (3) so ausgelegt ist, dass sie den festen Satz von Eingabedaten (5, 8, 9) sowie dynamische Daten (11) speichert, die eine potenzielle Auswirkung auf das Ausführen der Aufgaben (8) haben, und einen unabhängigen und asynchronen Zugriff auf die gespeicherten Daten ermöglicht,
• die erste Datenverarbeitungseinheit (1) so ausgelegt ist, dass sie den ersten Satz von Eingabedaten (5, 8, 9) aus der Datenbank (3) sammelt und die Zuweisung der mobilen Ressourcen (5) durch Zuweisen der Fähigkeiten (6) zu den Aufgaben (8) und zu den Einrichtungen (7) durchführt und für die mindestens eine der mobilen Ressourcen (5) als Teil jedes individuellen Plans (10a, 10b, 10c) eine Straße-für-Straße-Route entlang der Straßen zu den jeweils zugewiesenen Aufgaben (8) erzeugt, und
• eine zweite Datenverarbeitungseinheit (2) entweder in der ersten Computervorrichtung oder in einer weiteren Computervorrichtung implementiert ist, wobei die zweite Datenverarbeitungseinheit (2) so ausgelegt ist, dass sie den festen Satz von Eingabedaten (5, 8, 9) für die erste Datenverarbeitungseinheit (1) durch kontinuierliches Vorverarbeiten der dynamischen Daten (11) zum Bestimmen, welche der Straßendaten (9), der mobilen Ressourcen (5) und der Aufgaben (8) durch die dynamischen Daten (11) beeinflusst werden und in welchem Ausmaß, und durch dementsprechendes Ändern der betroffenen Daten (5, 8, 9) auf dem neuesten Stand hält.

2. System nach Anspruch 1, wobei die zweite Datenverarbeitungseinheit (2) so ausgelegt ist, dass sie eine logische Verknüpfung zwischen mindestens zweien der Fähigkeiten (6), Einrichtungen (7), Straßen und/oder Aufgaben (8) einführt, und wobei die erste Datenverarbeitungseinheit (1) so ausgelegt ist, dass sie das Zuweisen so durchführt, dass die logisch verknüpften Daten im individuellen Plan (10a, 10b, 10c) widergespiegelt werden.

3. System nach Anspruch 1 oder 2, wobei die Straßendaten (9) für jede der Straßen geschwindigkeitsbezogene Informationen enthalten, die einem spezifizierten Abschnitt der Straßen entsprechen, und wobei die erste Datenverarbeitungseinheit (1) so ausgelegt ist, dass sie den individuellen Plan (10a, 10b, 10c) und die entsprechende Straße-für-Straße-Route durch Minimieren einer Fahrzeitdauer und/oder einer Fahrstrecke pro vereinheitlichtem Zeitfenster bei Maximieren der Anzahl von zugewiesenen Aufgaben pro vereinheitlichtem Zeitfenster erzeugt.

4. System nach einem der vorhergehenden Ansprüche, wobei die dynamischen Daten (11) Daten von einer Verkehrsüberwachungszentrale über Verkehrsstaus, Unfälle und/oder Baustelle umfassen, und wobei die zweite Datenverarbeitungseinheit (2) so ausgelegt ist, dass sie die Straßen, die von den Daten von der Verkehrsüberwachungszentrale betroffen sind, und das Ausmaß identifiziert, bis zu welchem die Straßendaten (9), die den identifizierten Straßen entsprechen, betroffen sind, und die entsprechenden Straßendaten demgemäß anpasst.

5. System nach einem der Ansprüche 3 oder 4, wobei die Datenbank (3) so ausgelegt ist, dass sie die dynamischen Daten (11) über eine vordefinierte Zeitdauer speichert, und wobei die zweite Datenverarbeitungseinheit (2) so ausgelegt ist, dass sie ein zeitabhängiges Muster von Verkehrsdichte entlang der Straßen aus den dynamischen Daten (11) identifiziert und die Straßendaten (9) durch dementsprechendes Anpassen der geschwindigkeitsbezogenen Informationen ändert, um das Muster von Verkehrsdichte widerzuspiegeln.

6. System nach einem der Ansprüche 3 bis 5, wobei die dynamischen Daten (11) Daten eines verkehrsbezogenen öffentlichen Ereignisses umfassen, und wobei die zweite Datenverarbeitungseinheit (2) so ausgelegt ist, dass sie die Auswirkung des Ereignisses auf die geschwindigkeitsbezogenen Informationen schätzt und jene Straßen identifiziert, die während des Ereignisses für jeglichen Verkehr gesperrt sein werden.

7. System nach einem der Ansprüche 3 bis 6, wobei die dynamischen Daten (11) wetterbezogene Daten umfassen, und wobei die zweite Datenverarbeitungseinheit (2) so ausgelegt ist, dass sie die geschwindigkeitsbezogenen Informationen betroffener Straßen und/oder eine Prioritätsrangordnung der Einrichtungen (7) und/oder Fähigkeiten (6) dementsprechend anpasst, und wobei die erste Datenverarbeitungseinheit (1) so ausgelegt ist, dass sie das Zuweisen so durchführt, dass die Prioritätsrangordnung im individuellen Plan (10a, 10b, 10c) widergespiegelt wird.

8. System nach einem der vorhergehenden Ansprüche, wobei die dynamischen Daten (11) Daten über die Verfügbarkeit von Kraftstoff und/oder Elektrizität umfassen, und wobei die zweite Datenverarbeitungseinheit (2) so ausgelegt ist, dass sie eine Prioritätsrangordnung der Aufgaben (8) und/oder von kraftstoff- oder elektrizitätsbetriebenen Einrichtungen (7) an die jeweilige Verfügbarkeit anpasst.

9. System nach einem der vorhergehenden Ansprüche, wobei die zweite Datenverarbeitungseinheit (2) so ausgelegt ist, dass sie zukünftige Aufgaben basierend auf den dynamischen Daten (11) vorhersagt, und wobei die erste oder die zweite Datenverarbeitungseinheit so ausgelegt ist, dass sie eine geeignete Notreserve von mobilen Ressourcen (5) definiert, die zum Reagieren auf die vorhergesagten Aufgaben in der Lage sind.

10. System nach einem der vorhergehenden Ansprüche, wobei die dynamischen Daten (11) eine Aktualisierung eines Zustands einer mobilen Ressource (5) umfassen, und wobei die zweite Datenverarbeitungseinheit (2) so ausgelegt ist, dass sie eine resultierende Auswirkung auf eine der Fähigkeiten (6) und/oder Einrichtungen (7) bestimmt.

11. Verfahren zur computerimplementierten Zuweisung von mobilen Ressourcen zu Aufgaben, die an mindestens einem von den mobilen Ressourcen entfernten Ort ausgeführt werden sollen, umfassend:
• Speichern von Daten, welche die Aufgaben (8) sowie die mobilen Ressourcen (5) definieren, in mindestens einer Datenbank (3),
• Warten auf ein Auslöseereignis (4),
• Zugreifen nach Verständigung über das Auslöseereignis (4) auf die mindestens eine Datenbank (3) von einer ersten Datenverarbeitungseinheit (1), die in einer ersten Computervorrichtung implementiert ist, Zuweisen der mobilen Ressourcen (5) zu den Aufgaben (8) durch Verwenden der ersten Datenverarbeitungseinheit (1), um dadurch für mindestens eine der mobilen Ressourcen einen individuellen Plan (10a, 10b, 10c) zu erzeugen, und Senden eines jeden der individuellen Pläne (10a, 10b, 10c) an eine mobile Datenkommunikationsvorrichtung (12a, 12b, 12c), die der jeweiligen der mobilen Ressourcen (5) zugeordnet ist,
**gekennzeichnet durch** die folgenden weiteren Schritte:
• Verwenden einer Datenschnittstelle zur ersten Verarbeitungseinheit (1), die durch Einführen eines festen Satzes von Eingabedaten (5, 8, 9) in einem vordefinierten Format standardisiert ist, wobei der feste Satz von Eingabedaten aus den Daten, welche die Aufgaben (8) sowie die mobilen Ressourcen (5) definieren, und Straßendaten (9) besteht, welche Straßen zwischen einem aktuellen Ort der mobilen Ressourcen (5) und dem mindestens einen entfernten Ort der Aufgaben (8) definieren, wobei die Daten, welche die mobilen Ressourcen (5) definieren, für jede mobile Ressource (5) mindestens eine entsprechende Fähigkeit (6) und mindestens eine entsprechende Einrichtung (7) enthalten,
∘ Speichern in der mindestens einen Datenbank (3) des festen Satzes von Eingabedaten (5, 8, 9) sowie dynamischer Daten (11), die eine potenzielle Auswirkung auf das Ausführen der Aufgaben (8) haben, und Ermöglichen eines unabhängigen und asynchronen Zugriffs auf die gespeicherten Daten,
• Sammeln des festen Satzes von Eingabedaten (5, 8, 9) aus der Datenbank (3) und Durchführen des Zuweisens der mobilen Ressourcen (5) durch Zuweisen der Fähigkeiten (6) zu den Aufgaben (8) und zu den Einrichtungen (7) und durch Erzeugen für die mindestens eine der mobilen Ressourcen (5) als Teil jedes individuellen Plans (10a, 10b, 10c) einer Straße-für-Straße-Route entlang der Straßen zu den jeweils zugewiesenen Aufgaben (8), und
• Halten des festen Satzes von Eingabedaten (5, 8, 9) durch kontinuierliches Vorverarbeiten der dynamischen Daten (11) durch Verwenden einer zweiten Datenverarbeitungseinheit (2), die in einer ersten oder einer weiteren Computervorrichtung implementiert ist, zum Bestimmen, welche der Straßendaten (9), der mobilen Ressourcen (5) und der Aufgaben (8) durch die dynamischen Daten (11) beeinflusst werden und in welchem Ausmaß, und durch dementsprechendes Ändern der betroffenen Daten (5, 8, 9) auf dem neuesten Stand.

## Revendications

1. Système d'affectation automatique de ressources mobiles à des tâches destinées à être accomplies à au moins un emplacement distant des ressources mobiles, le système comprenant :
• au moins une base de données (3) conçue pour stocker des données définissant les tâches (8) ainsi que les ressources mobiles (5),
• un premier dispositif informatique contenant une première unité de traitement de données (1) conçue pour
∘ attendre un événement déclencheur (4),
∘ après avoir reçu notification de l'événement déclencheur (4), accéder à l'au moins une base de données (3), affecter les ressources mobiles (5) aux tâches (8) de manière à générer, pour au moins une des ressources mobiles, un programme individuel (10a, 10b, 10c), et transmettre chacun des programmes individuels (10a, 10b, 10c) à un dispositif de communication de données mobile (12a, 12b, 12c) affecté à la ressource mobile respective parmi les ressources mobiles,
**caractérisé en ce que**
• une interface de données avec la première unité de traitement (1) est normalisée par introduction d'un ensemble fixe de données d'entrée (5, 8, 9) dans un format prédéfini, l'ensemble fixe de données d'entrée étant constitué des données définissant les tâches (8) ainsi que les ressources mobiles (5) et de données de rez-de-voirie (9) définissant des routes entre un emplacement actuel des ressources mobiles (5) et l'au moins un emplacement distant des tâches (8), les données définissant les ressources mobiles (5) contenant, pour chaque ressource mobile (5), au moins une compétence correspondante (6) et au moins un équipement correspondant (7),
• l'au moins une base de données (3) est conçue pour stocker l'ensemble fixe de données d'entrée (5, 8, 9) ainsi que des données dynamiques (11) qui impactent potentiellement l'accomplissement des tâches (8) et permet un accès indépendant et asynchrone aux données stockées,
• la première unité de traitement de données (1) est conçue pour collecter l'ensemble fixe de données d'entrée (5, 8, 9) dans la base de données (3) et pour accomplir l'affectation des ressources mobiles (5) par affectation des compétences (6) aux tâches (8) et aux équipements (7), et pour générer, pour l'au moins une des ressources mobiles (5) dans le cadre de chaque programme individuel (10a, 10b, 10c), un itinéraire rue par rue le long de routes jusqu'aux tâches respectivement affectées (8), et
• une deuxième unité de traitement de données (2) est mise en oeuvre soit dans le premier dispositif informatique, soit dans un dispositif informatique supplémentaire, la deuxième unité de traitement de données (2) étant conçue pour tenir à jour l'ensemble fixe de données d'entrée (5, 8, 9) dans la première unité de traitement de données (1) en soumettant les données dynamiques (11) à un traitement préalable continu dans le but de déterminer lesquelles des données de rez-de-voirie (9), des ressources mobiles (5) et des tâches (8) sont affectées par les données dynamiques (11) et dans quelle mesure, et en modifiant en conséquence les données affectées (5, 8, 9).

2. Système selon la revendication 1, dans lequel la deuxième unité de traitement de données (2) est conçue pour introduire un lien logique entre au moins deux des compétences (6), équipements (7), routes et/ou tâches (8), et dans lequel la première unité de traitement de données (1) est conçue pour accomplir l'affectation de manière à ce que le programme individuel (10a, 10b, 10c) tienne compte des données liées logiquement.

3. Système selon la revendication 1 ou 2, dans lequel les données de rez-de-voirie (9) contiennent, pour chacune des routes, des informations sur la vitesse correspondant à un tronçon spécifié de la route, et dans lequel la première unité de traitement de données (1) est conçue pour générer le programme individuel (10a, 10b, 10c) et l'itinéraire rue par rue correspondant en minimisant une durée de parcours et/ou une distance de parcours par fenêtre temporelle unifiée tout en maximisant le nombre de tâches affectées par fenêtre temporelle unifiée.

4. Système selon l'une quelconque des revendications précédentes, dans lequel les données dynamiques (11) comportent des données en provenance d'un centre de régulation de la circulation concernant des embouteillages, des accidents et/ou des chantiers, et dans lequel la deuxième unité de traitement de données (2) est conçue pour identifier les routes qui sont affectées par les données en provenance du centre de régulation de la circulation et la mesure dans laquelle les données de rez-de-voirie (9) correspondant aux routes identifiées sont affectées et pour ajuster en conséquence les données de rez-de-voirie correspondantes.

5. Système selon l'une quelconque des revendications 3 ou 4, dans lequel la base de données (3) est conçue pour stocker les données dynamiques (11) sur un intervalle de temps prédéfini, et dans lequel la deuxième unité de traitement de données (2) est conçue pour identifier, à partir des données dynamiques (11), un modèle fonction du temps d'intensité de la circulation le long des routes et pour modifier les données de rez-de-voirie (9) pour tenir compte du modèle d'intensité de la circulation en ajustant en conséquence les informations sur la vitesse.

6. Système selon l'une quelconque des revendications 3 à 5, dans lequel les données dynamiques (11) comportent des données d'un événement public lié à la circulation, et dans lequel la deuxième unité de traitement de données (2) est conçue pour estimer l'impact de l'événement sur les informations sur la vitesse et pour identifier les routes qui seront condamnées à la circulation pendant l'événement.

7. Système selon l'une quelconque des revendications 3 à 6, dans lequel les données dynamiques (11) comportent des données sur la météo, dans lequel la deuxième unité de traitement de données (2) est conçue pour ajuster en conséquence les informations sur la vitesse de routes affectées et/ou un classement de priorité des équipements (7) et/ou des compétences (6), et dans lequel la première unité de traitement de données (1) est conçue pour accomplir l'affectation de manière à ce que le programme individuel (10a, 10b, 10c) tienne compte du classement de priorité.

8. Système selon l'une quelconque des revendications précédentes, dans lequel les données dynamiques (11) comportent des données sur la disponibilité de carburant et/ou d'électricité, et dans lequel la deuxième unité de traitement de données (2) est conçue pour adapter un classement de priorité des tâches (8) et d'équipements propulsés au carburant ou à l'électricité (7) à la disponibilité respective.

9. Système selon l'une quelconque des revendications précédentes, dans lequel la deuxième unité de traitement de données (2) est conçue pour prédire des tâches futures en fonction des données dynamiques (11), et dans lequel la première ou la deuxième unité de traitement de données est conçue pour définir une réserve d'urgence adéquate de ressources mobiles (5) apte à répondre aux tâches prédites.

10. Système selon l'une quelconque des revendications précédentes, dans lequel les données dynamiques (11) comportent une mise à jour sur un état d'une ressource mobile (5), et dans lequel la deuxième unité de traitement de données (2) est conçue pour déterminer un impact consécutif sur l'une ou l'un quelconque des compétences (6) et/ou équipements (7).

11. Procédé, mis en oeuvre par ordinateur, d'affectation automatique de ressources mobiles à des tâches destinées à être accomplies à au moins un emplacement distant des ressources mobiles, le procédé comprenant les étapes consistant à
• stocker des données définissant les tâches (8) ainsi que les ressources mobiles (5) dans au moins une base de données (3),
• attendre un événement déclencheur (4),
• après avoir reçu notification de l'événement déclencheur (4), accéder à l'au moins une base de données (3) à partir d'une première unité de traitement de données (1), mise en oeuvre dans un premier dispositif informatique, affecter les ressources mobiles (5) aux tâches (8) au moyen de la première unité de traitement de données (1), de manière à générer, pour au moins une des ressources mobiles (5), un programme individuel (10a, 10b, 10c), et transmettre chacun des programmes individuels (10a, 10b, 10c) à un dispositif de communication de données mobile (12a, 12b, 12c) affecté à la ressource mobile respective parmi les ressources mobiles (5),
**caractérisé par** les étapes supplémentaires consistant à
• utiliser une interface de données avec la première unité de traitement (1) qui est normalisée par introduction d'un ensemble fixe de données d'entrée (5, 8, 9) dans un format prédéfini, l'ensemble fixe de données d'entrée étant constitué des données définissant les tâches (8) ainsi que les ressources mobiles (5) et de données de rez-de-voirie (9) définissant des routes entre un emplacement actuel des ressources mobiles (5) et l'au moins un emplacement distant des tâches (8), les données définissant les ressources mobiles (5) contenant, pour chaque ressource mobile (5), au moins une compétence correspondante (6) et au moins un équipement correspondant (7),
∘ stocker dans l'au moins une base de données (3) l'ensemble fixe de données d'entrée (5, 8, 9) ainsi que des données dynamiques (11) qui impactent potentiellement l'accomplissement des tâches (8) et permettre un accès indépendant et asynchrone aux données stockées,
• collecter l'ensemble fixe de données d'entrée (5, 8, 9) dans la base de données (3) et accomplir l'affectation des ressources mobiles (5) en affectant les compétences (6) aux tâches (8) et aux équipements (7), et en générant, pour l'au moins une des ressources mobiles (5) dans le cadre de chaque programme individuel (10a, 10b, 10c), un itinéraire rue par rue le long de routes jusqu'aux tâches affectées (8), et
• tenir à jour l'ensemble fixe de données d'entrée (5, 8, 9) en soumettant les données dynamiques (11) à un traitement préalable continu en utilisant une deuxième unité de traitement de données (2) mise en oeuvre dans un premier dispositif informatique ou dans un dispositif informatique supplémentaire, dans le but de déterminer lesquelles des données de rez-de-voirie (9), des ressources mobiles (5) et des tâches (8) sont affectées par les données dynamiques (11) et dans quelle mesure, et en modifiant en conséquence les données affectées (5, 8, 9).
